# EUROPÄISCHE PATENTSCHRIFT

(11) **EP 1 914 112 B1**
(45) Veröffentlichungstag und Bekanntmachung des Hinweises auf die Patenterteilung: **15.04.2009**
(21) Anmeldenummer: 07020305.4
(22) Anmeldetag: 17.10.2007
(51) Int. Cl.: B60P 1/26

(54) **Bewegungsmechanismus für eine aufklappbare Bordwand**
Actuating mechanism for a folding platform gate
Mécanisme de déplacement pour un hayon relevable

(30) Priorität: 20.10.2006 DE 102006049559
(43) Veröffentlichungstag der Anmeldung: 23.04.2008
(73) Patentinhaber: Franz Xaver Meiller Fahrzeug- und Maschinenfabrik-GmbH & Co KG, 80997 München (DE)
(72) Erfinder: Popp, Klaus, 82346 Andechs (DE)
(74) Vertreter: Tiesmeyer, Johannes

(56) Entgegenhaltungen:
- WO-A-03/043850
- AU-A- 1 528 983
- FR-A- 2 699 470
- FR-A- 2 843 344
- US-A- 4 076 310
- US-A1- 2004 032 141

## Beschreibung

Die vorliegende Erfindung betrifft einen Bewegungsmechanismus für eine aufklappbare Bordwand eines Ladekastens eines Lastentransportfahrzeugs gemäß dem Oberbegriff von Anspruch 1.

Ein derartiger Bewegungsmechanismus ist aus der US 4,076,310 bekannt.

Solche Bewegungsmechanismen ermöglichen das automatische Öffnen und Schließen von Bordwänden, ohne dass der Fahrer eines entsprechenden Lastentransportfahrzeugs die Bordwand von Hand auf- bzw. zuklappen muss. In Fachkreisen sind solche Bewegungsmechanismen auch unter dem Begriff "Bordmatik" bekannt.

Allerdings nehmen die bekannten Bewegungsmechanismen unterhalb des Ladekastens einen relativ großen Bauraum ein, was ein Anbringen von weiteren oder größeren Bauteilen bzw. Komponenten erschwert.

Aufgabe der Erfindung ist es, einen gattungsgemäßen Bewegungsmechanismus derart weiterzubilden, dass die oben genannten Nachteile vermieden werden können.

Diese Aufgabe wird dadurch gelöst, dass das Anschlagelement im Bereich der Lageranordnung angebracht ist und dass das verstellbare Anschlaggegenstück an der Hebelanordnung angeordnet ist.

Die Begrenzungsmittel ermöglichen es, die Bordwand in geöffneter Stellung in einem wählbaren Winkel bezogen auf die Vertikalrichtung einzustellen. Zwischen der Bordwand und den Bauteilen bzw. Komponenten des Lastentransportfahrzeugs entsteht somit ein Zwischenraum, der den Zugang zu den Bauteilen bzw. Komponenten auch bei geöffneter Bordwand ermöglicht. Ferner liegt die Bordwand nicht an anderen Bauteilen bzw. Komponenten an, so dass Beschädigungen durch die Bordwand an diesen vermieden werden können. Bei einer Bordwand, welche beispielsweise in geöffnetem Zustand in etwa bis zur Hälfte des Durchmessers der Räder reicht, eröffnet bereits ein relativ kleiner Winkel zwischen der Bordwand und der Vertikalrichtung die Möglichkeit, dass ein Fahrer seine Hand bzw. seinen Arm hinter die Bordwand einführen kann, so dass er Zugang zu den abgedeckten Bauteilen bzw. Komponenten hat.

Die Anordnung des verstellbaren Anschlaggegenstücks ermöglicht die einfache Einstellung der Öffnungsbegrenzung der Bordwand, weil das Anschlaggegenstück in der Schließstellung der Bordwand an der von außen besser zugänglichen Hebelanordnung liegt, so dass die Einstellung in der Schließstellung der Bordwand einfach erfolgen kann.

Gemäß einer Ausführungsform ist das Anschlagelement als geneigte Platte ausgebildet und das Anschlaggegenstück umfasst eine Stellschraube.

Selbstverständlich können das Anschlagelement und das Anschlaggegenstück auch gegenseitig ausgetauscht werden und an der jeweils anderen Komponente (Lageranordnung bzw. Hebelanordnung) angebracht sein. Es ist auch nicht ausgeschlossen, dass beide die Begrenzungsmittel bildenden Anschlagbauteile verstellbar ausgeführt sind.

Die Lageranordnung kann wenigstens eine von einer Unterseite des Ladebodens des Ladekastens nach unten vorstehende Traverse, insbesondere einen Querträger, des Ladekastenunterbaus, mit darin integriertem Drehlager für die Lagerung des Betätigungszylinders umfassen.

In diesem Zusammenhang wird vorgeschlagen, dass die Lageranordnung durch zwei zueinander parallel ausgerichtete Traversen gebildet wird, wobei der Abstand zwischen den beiden Traversen derart ausgeführt ist, dass der Betätigungszylinder insbesondere in der Öffnungs- und der Schließstellung der Bordwand wenigstens teilweise zwischen den beiden Traversen aufgenommen ist.

Dabei kann der Betätigungszylinder mit einem Abschnitt zwischen den beiden Traversen aufgenommen sein, welcher zwischen einer Gelenkverbindung des Kolbens mit der Hebelanordnung und dem Drehlager der Lageranordnung liegt.

Durch die genannte Anordnung der Traversen und des Betätigungszylinders wird eine kompakte Bauweise ermöglicht, da die Traversen und der Betätigungszylinder sehr nahe an der Unterseite des Ladebodens des Ladekastens angeordnet werden können.

Um die Konstruktion weiter zu vereinfachen, wird vorgeschlagen, dass die Traversen derart ausgebildet sind, dass sie auch ein die Hebelachse der Hebelanordnung definierendes Hebeldrehlager aufweisen.

Ferner ist es in diesem Zusammenhang auch möglich, dass die Traversen an ihren äußeren Enden derart ausgeführt sind, dass sie ein Drehlager der Bordwand bilden.

Das Anschlagelement kann zwischen den beiden Traversen angeordnet werden, so dass die beiden Traversen einen gewissen Schutz für das Anschlagelement bilden.

Gemäß einer Ausführungsform kann die Lageranordnung als modulares Bauteil ausgeführt sein, das die zwei Traversen und wenigstens einen Verbindungsabschnitt aufweist, wobei es an der Unterseite des Ladebodens des Ladekastens befestigbar ist.

Denkbar sind beispielsweise ein Verbindungsabschnitt, der gleich lang wie die Traversen ist, oder mehrere Verbindungsabschnitte, welche über die Länge der Traversen verteilt sind, um hierdurch Gewicht einsparen zu können. Ein solches Lagermodul kann beispielsweise nachträglich an einem Ladekasten angebracht werden, so dass dieser mit einem Bewegungsmechanismus nachgerüstet werden kann.

Alternativ hierzu kann die Lageranordnung von zwei mit der Unterseite des Ladebodens des Ladekastens materialschlüssig verbundenen Traversen gebildet werden, wobei der Materialschluss vorzugsweise durch Verschweißen hergestellt wird.

Dabei ist es besonders bevorzugt, dass wenigstens eine der beiden Traversen ein Querträger des Ladekastenunterbaus ist.

Eine solche Ausgestaltung der Lageranordnung ermöglicht das Bereitstellen von wenigstens einer Lageranordnung am Ladekasten bei der Herstellung des Ladekastens, wobei der Zusammenbau mit dem Betätigungszylinder zum Bewegungsmechanismus zu einem späteren Zeitpunkt erfolgen kann.

Das Anschlagelement kann bei den genannten alternativen Ausführungsformen der Lageranordnung am Verbindungsabschnitt der beiden Traversen oder an der Unterseite des Ladebodens befestigt sein.

Um die Bauweise des Bewegungsmechanismus kompakt auszuführen, kann der mit dem Kolben des Betätigungszylinders verbundene Hebel der Hebelanordnung als Gabelhebel mit einem ersten und einem zweiten Schenkel ausgebildet sein.

Insbesondere kann der erste Schenkel des Gabelhebels an einem die Hebelachse definierenden Schwenklager angelenkt sein und der zweite Schenkel des Gabelhebels kann durch einen weiteren Hebel mit der Bordwand gelenkig verbunden sein.

Um eine optimale Krafteinleitung vom Kolben auf den Gabelhebel zu ermöglichen, ist es bevorzugt, dass der Kolben des Betätigungszylinders in einem Verbindungsbereich der beiden Schenkel des Gabelhebels angelenkt ist.

Um ein seitliches Vorstehen von Bauteilen des Bewegungsmechanismus vom Ladekasten möglichst zu vermeiden, kann der Gabelhebel derart ausgebildet sein, dass in der Schließstellung der Bordwand ein die Schwenkachse festlegendes Drehlager der Bordwand in einem durch die Schenkel des Gabelhebels gebildeten, im Wesentlichen U-förmigen Zwischenraum aufgenommen ist.

In der Öffnungsstellung der Bordwand kann der Gabelhebel wenigstens teilweise im durch die beiden Traversen gebildeten Zwischenraum aufgenommen sein. Hierdruch kann die am Gabelhebel angeordnete Stellschraube mit dem zwischen den Traversen angebrachten Plattenelement den Anschlag für die Bordwand bilden.

Weiterbildend wird ferner vorgeschlagen, dass in der Öffnungsstellung oder/und der Schließstellung der Bordwand zwischen der Längsachse des Betätigungszylinders und der Ladebodenebene des Ladekastens ein Winkel gebildet wird, der kleiner als 15°, vorzugsweise kleiner als 10°, ist.

Hierdurch wird die gewünschte kompakte Bauweise erreicht, welche mehr Raum für die Anordnung von weiteren Komponenten oder für den Zugang zu Bauteilen bzw. Komponenten ermöglicht.

Dabei ist insbesondere vorgesehen, dass eine durch die Gelenkverbindung des Bewegungsmechanismus mit der Hebelanordnung festgelegte, zur Hebelachse parallele Anlenkachse bezogen auf die Ladebodenebene unterhalb einer durch die Lagerung des Betätigungszylinders in der Lageranordnung festgelegten, zur Hebelachse parallelen Zylinderdrehachse liegt.

Schließlich betrifft die Erfindung auch ein Lastentransportfahrzeug mit einem erfindungsgemäßen Bewegungsmechanismus.

Die Erfindung wird nachfolgend anhand eines nicht einschränkenden Ausführungsbeispiels unter Bezugnahme auf die anliegenden Figuren genauer beschrieben.
- Fig. 1: ist eine perspektivische Teildarstellung einer seitlichen Bordwand eines Ladekastens mit einer Ausführungsform des erfindungsgemäßen Bewegungsmechanismus.
- Fig. 2: ist eine Teilschnittdarstellung gemäß der Linie II-II der Fig. 1, wobei die Bordwand in Schließstellung dargestellt ist.
- Fig. 3: ist eine Teilschnittdarstellung entsprechend der Fig. 2, wobei die Bordwand in einer Zwischenstellung dargestellt ist.
- Fig. 4: ist eine Teilschnittdarstellung entsprechend der Fig. 2, wobei die Bordwand in Öffnungsstellung dargestellt ist.

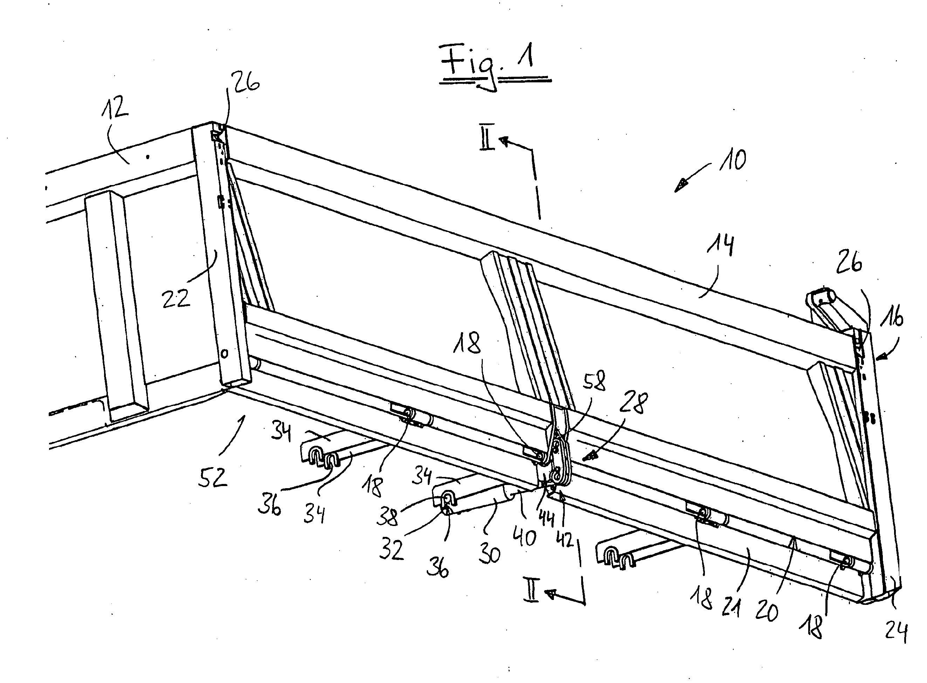

Ein in der Figur 1 teilweise und vereinfacht dargestellter Ladekasten 10 eines nicht weiter dargestellten Lastentransportfahrzeugs weist eine vordere, nicht klappbare Bordwand 12, zwei seitliche, aufklappbare Bordwände 14 und eine ebenfalls schwenkbare hintere Bordwand 16 auf. Die Seitenbordwand 14, welche im Ausführungsbeispiel von der vorderen Bordwand 12 zur hinteren Bordwand 16 durchgehend ausgebildet ist, ist durch fünf Drehlager 18, welche mit einem nicht näher dargestellten Unterbau des Ladekastens verbunden sind, an ihrem unteren Rand 20 schwenkbar bezüglich des Ladekastenunterbaus gelagert. Entlang des Rands 20 erstreckt verläuft ferner eine Schüttleiste 21. Die Seitenbordwand 14 wird in der hier dargestellten geschlossenen Stellung durch in vorderen und hinteren Haltepfosten 22, 24 bzw. Rungen eingebauten Verschlussmechanismen 26 gehalten, welche nicht im Detail dargestellt sind. Im Bereich des dritten Drehlagers 18 (gezählt von der vorderen Bordwand 12) ist ein Bewegungsmechanismus 28 angebracht, welcher das automatische Öffnen und Schließen der Bordwand 14 ermöglicht, wobei die Schüttleiste 21 in diesem Bereich ausgeschnitten ist.

Der Bewegungsmechanismus28 umfasst einen Hydraulikzylinder 30, der in einem Drehlager 32 am Ladekastenunterbau abgestützt ist. Das Drehlager 32 wird durch zwei zur Längsrichtung des Ladekastens quer verlaufende Bauteile 34 gebildet, welche im Bereich des Drehlagers 32 jeweils Ausnehmungen 36 aufweisen, in die vom Zylinder 30 vorstehende Zapfen 38 eingreifen. Um das Herausfallen der Zylinder 30 aus den Ausnehmungen 36 zu verhindern, werden im Ausführungsbeispiel nicht dargestellte Sicherungsstifte verwendet, welche sich unterhalb der Zapfen 38 im Wesentlichen parallel zu den Traversen 34 von einem Rand der Ausnehmung 36 zum anderen erstrecken. Der Zylinder 30 kann somit um eine durch die Zapfen 38 festgelegte Zylinderdrehachse 33 verschwenkt werden. Ein zum Hydraulikzylinder 30 zugehöriger Kolben 40 ist bei 42 mit einem Gabelhebel 44 gelenkig verbunden, so dass die im Wesentlichen translatorische Bewegung des Kolbens 40 in eine Schwenkbewegung der Bordwand 14 um die durch die Drehlager 18 festgelegte Schwenkachse übersetzt bzw. übertragen wird. Die Gelenkverbindung 42 legt auch eine Anlenkachse 41 fest. Selbstverständlich könnte der Zylinder 30 auch umgekehrt eingebaut werden, so dass der Kolben am Drehlager 32 und der Zylinder am Gabelhebel 44 angelenkt ist.

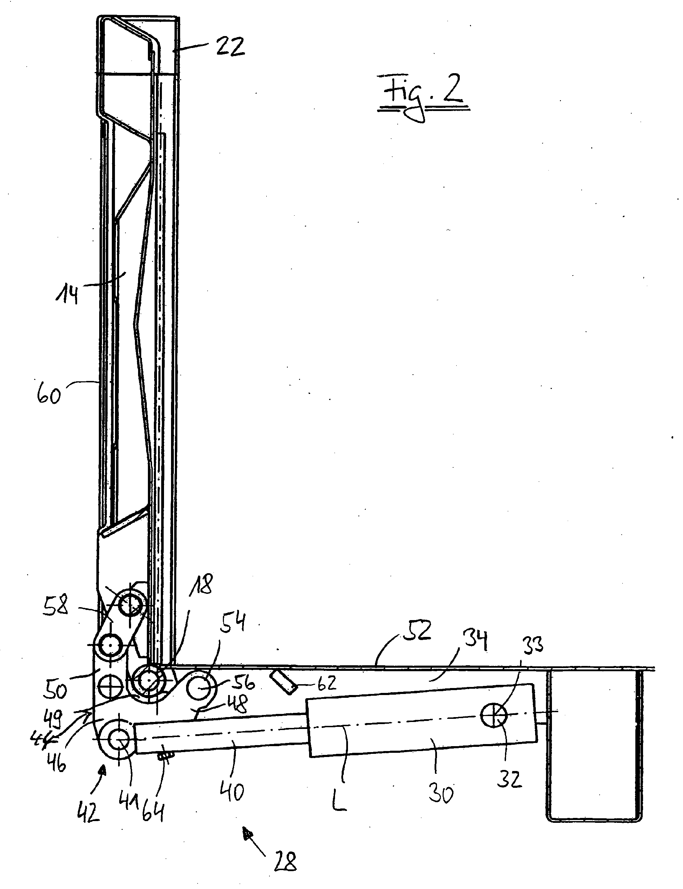

Unter Bezugnahme auf die Figuren 2 bis 4 wird nun der Bewegungsmechanismus 28 detailliert beschrieben. In Figur 2 ist der Bewegungsmechanismus 28 in der Schließstellung der Bordwand 14 dargestellt. In dieser Stellung ist der Kolben 40 aus dem Zylinder 30 ausgefahren. Der Kolben 40 ist in einem Verbindungsbereich 46 der beiden Schenkel 48, 50 des Gabelhebels 44 angelenkt. Der Schenkel 48 erstreckt sich vom Verbindungsbereich 46 aus unter den Ladeboden 52 des Ladekastens und ist dort bezüglich des Ladebodens drehbar gelagert, wobei dieses Drehlager 54 eine Hebelachse 56 definiert, um die der Gabelhebel 44 von der Öffnungs- in die Schließstellung der Bordwand 14 verschwenkt wird. Die beim Öffnungs- bzw. Schließvorgang durch den Gabelhebel abzustützenden Kräfte werden durch dieses Lager 54 und das Drehlager 32 des Zylinders 30 auf die Ladekastenunterbaukonstruktion übertragen. Der andere Schenkel 50 des Gabelhebels 44 ist über einen weiteren, kurzen Hebel 58 mit der Bordwand 14 verbunden, so dass hierdurch die Drehbewegung des Gabelhebels 44 auf die Bordwand 14 übertragen wird.
In der Schließstellung bilden der zweite Schenkel 50 des Gabelhebels 44 und die Außenseite 60 der Bordwand eine nahezu bündige Kontur des Ladekastens, so dass kein für Beschädigungen anfälliges, vorstehendes Bauteil am Ladekasten vorhanden ist. Diese kompakte Bauweise wird auch dadurch erreicht, dass das Drehlager 18 der Bordwand 14 in der Schließstellung in dem zwischen den beiden Schenkeln 48, 50 gebildeten Raum 49, der im Wesentlichen U-förmig ausgebildet ist, aufgenommen ist.

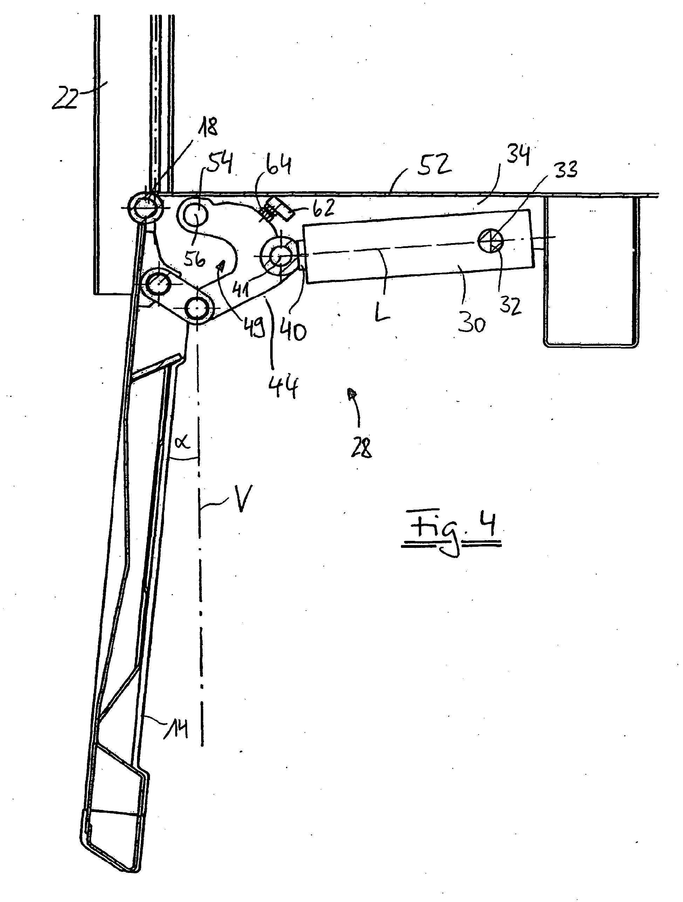

An der Unterseite des Ladebodens 52 ist eine geneigte Platte 62 befestigt, welche als Anschlagelement für eine in den Gabelhebel 44 eingefügte Stellschraube 64 dient. Diese Stellschraube 64 kommt in der in Fig. 4 dargestellten Öffnungsstellung der Bordwand 14 in Berührung mit der Platte 62, so dass ein weiteres Öffnen der Bordwand 14 durch weiteres Einfahren des Kolbens 40 in den Zylinder 30 verhindert ist. Hierdurch wird die Bordwand 14 in einer Öffnungsstellung fixiert, in der die Bordwand 14 nicht parallel zu einer zur Papierebene orthogonalen Vertikalebene V verläuft, sondern mit ihr einen Winkel α bildet. Der Winkel α ist umso größer, je weiter die Stellschraube 64 aus dem Gabelhebel 44 herausgeschraubt ist, so dass die Berührung zwischen Stellschraube 64 und Platte 62 zu einem früheren Zeitpunkt der Öffnungsbewegung eintritt. Der zwischen der Vertikalebene V und der geöffneten Bordwand 14 entstehende Raum ermöglicht es, dass ein Fahrer beispielsweise hinter die offene Bordwand greifen kann und eine am Fahrzeug angebrachte Komponente bedienen kann. Ferner kommt die Bordwand durch diese Art Anschlag nicht in Berührung mit anderen Bauteilen bzw. Komponenten des Fahrzeugs, wie beispielsweise den Reifen, so dass Beschädigungen verhindert werden können.

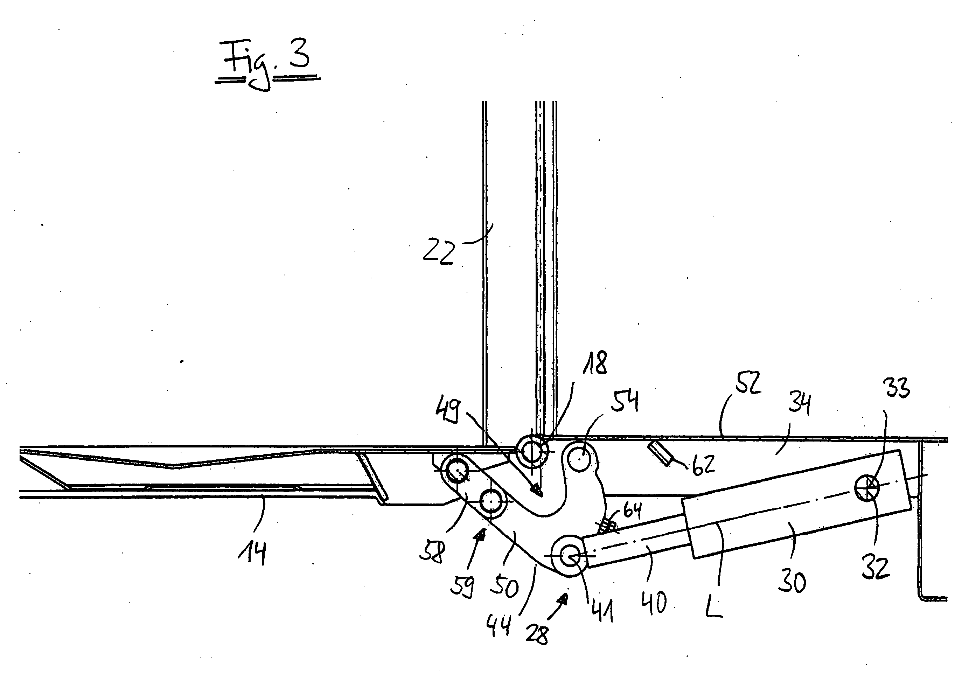

Der Schenkel 50 des Gabelhebels 44 und der Hebel 58 bilden eine Kniehebelanordnung 59, welche derart ausgelegt ist, dass sie in der horizontalen Zwischenstellung der Bordwand 14 gemäß Fig. 3 einen im Wesentlichen gestreckten Träger bilden, über den das in dieser Stellung wirkende, größte Drehmoment aufgenommen und über den Schenkel 48 und den Zylinder 30 am Ladekastenunterbau abgestützt werden kann.

In den Figuren 2 bis 4 ist auch eine der beiden Traversen 34 ersichtlich, welche in diesem Ausführungsbeispiel mit der Unterseite des Ladebodens 52 verschweißt ist und sich von diesem vertikal nach unten erstreckt. Die Traversen 34 dienen auch zur Abstützung des Drehlagers 54, um welches der Gabelhebel 44 um die Hebelachse 56 verschwenkt wird. Ferner weisen die Traversen 34 an ihren äußeren Enden Öffnungen auf, in denen die Drehlager 18 der Bordwand 14 gelagert sind. Die beiden Traversen bilden somit eine Lageranordnung für den Bewegungsmechanismus 28.

In der Öffnungs- und der Schließstellung wird zwischen einer Längsachse L des Zylinders 30 und der Ladebodenebene 52 ein Winkel von etwa 5° gebildet. Dies ermöglicht es, den Zylinder sehr nahe an der Ladebodenunterseite anzubringen, so dass Bauraum für den Bewegungsmechanismus eingespart werden kann. Der Zylinder 30 und der dazugehörige Kolben 40 sind somit in der Schließstellung auf einem Großteil ihrer Länge, in der Öffnungsstellung auf ihrer gesamten Länge teilweise zwischen den beiden Traversen 34 aufgenommen. Der Zylinder 30 ist also in vertikaler Richtung zwischen den Traversen 34 in gewisser Weise versenkbar. Diese Konstruktion macht sich somit die zur Kraftübertragung erforderliche Struktur so zum Nutzen, dass auch der für die Bordmatik benötigte Bauraum verkleinert werden kann.

Zu den beiden Traversen 34 ist noch anzufügen, dass diese auch als selbständiges Bauteil ausgeführt sein können, wobei die Traversen dann mit wenigstens einem Verbindungsstück so miteinander verbunden sein müssen, dass sie den erforderlichen Abstand zueinander aufweisen, um den Zylinder dazwischen aufnehmen zu können.

In einer Alternative zur oben vorgestellten Ausführungsform kann eine der Traversen auch ein Querträger des Ladekastenunterbaus sein, in dem entsprechende Öffnungen zur Abstützung der entsprechenden Drehlager vorzusehen sind.

Unter erneuter Bezugnahme auf Fig. 1 wird noch darauf hingewiesen, dass ein Ladekasten 10 mit mehreren durch Traversen 34 gebildeten Lageranordnungen ausgeführt sein kann. Die beim zweiten und beim vierten Drehlager 18 vorhandenen Traversen könnten dann mit einem Zylinder bestückt werden, wenn die seitliche Bordwand 14 in Längsrichtung zweiteilig ausgeführt ist und zwei Bordwände automatisch betätigt werden sollen oder wenn die durchgehende Bordwand 14 eine Höhe aufweist, die zwei Bewegungsmechanismen erfordert, um das Gewicht der Bordwand abstützen zu können. Selbstverständlich wären in einem solchen Fall entsprechende Ausschnitte an der Schüttleiste 21 beim zweiten und beim vierten Drehlager 18 erforderlich, wohingegen auf einen Ausschnitt beim dritten Drehlager verzichtet werden könnte.

Ferner ist es auch denkbar, einen Ladekasten mit den entsprechenden Lageranordnungen bereitzustellen und den Einbau von Zylindern nur dann vorzunehmen, wenn Bedarf für eine automatisch bedienbare Bordwand besteht. Bei einem Ladekasten, der solche Lageranordnungen bereits aufweist, ist eine Nachrüstung mit einem Zylinder ohne weiteres möglich.

## Patentansprüche

1. Bewegungsmechanismus für eine aufklappbare Bordwand (14) eines Ladekastens (10) eines Lastentransportfahrzeugs, die relativ zum Unterbau des Ladekastens (10) um eine Schwenkachse zwischen einer Schließstellung und einer Öffnungsstellung verschwenkbar ist, umfassend
- wenigstens einen Betätigungszylinder (30, 40), insbesondere Hydraulikzylinder, zur wahlweisen Bewegung der Bordwand (14),
- eine zwischen der Bordwand (14) und dem Betätigungszylinder (30, 40) wirkende, um eine bezüglich des Ladekastenunterbaus ortsfeste Hebelachse (56) drehbare Hebelanordnung (44, 58), welche die Bewegung eines Kolbens (40) des Betätigungszylinders (30) in die Schwenkbewegung der Bordwand (14) übersetzt,
- wenigstens eine Lageranordnung (32, 34), an welcher der wenigstens eine Betätigungszylinder (30) bezüglich des Ladekastenunterbaus gelagert ist,
wobei der Mechanismus ferner mechanische Begrenzungsmittel (62, 64) umfasst, welche die wahlweise veränderbare Festlegung der Öffnungsstellung der Bordwand (14) unabhängig von einer Anschlagstellung des Kolbens (40) im Betätigungszylinder (30) ermöglichen, und wobei
die Begrenzungsmittel ein Anschlagelement (62) und ein in Öffnungsstellung der Bordwand (14) mit dem Anschlagelement (62) in Berührung stehendes, verstellbares Anschlaggegenstück (64) umfassen,
**dadurch gekennzeichnet, dass** das Anschlagelement (62) im Bereich der Lageranordnung (32, 34) angebracht ist und dass das verstellbare Anschlaggegenstück (64) an der Hebelanordnung (44, 58) angeordnet ist.

2. Bewegungsmechanismus nach Anspruch 1, **dadurch gekennzeichnet, dass** das Anschlagelement als geneigte Platte (62) ausgebildet ist.

3. Bewegungsmechanismus nach Anspruch 1 oder 2, **dadurch gekennzeichnet, dass** das Anschlaggegenstück eine Stellschraube (64) umfasst.

4. Bewegungsmechanismus nach einem der vorhergehenden Ansprüche, **dadurch gekennzeichnet, dass** die Lageranordnung (32, 34) wenigstens eine von einer Unterseite des Ladebodens (52) des Ladekastens (10) nach unten vorstehende Traverse (34), insbesondere einen Querträger, des Ladekastenunterbaus, mit darin integriertem Drehlager (32) für die Lagerung des Betätigungszylinders (30) umfasst.

5. Bewegungsmechanismus nach Anspruch 4, **dadurch gekennzeichnet, dass** die Lageranordnung durch zwei zueinander parallel ausgerichtete Traversen (34) gebildet wird, wobei der Abstand zwischen den beiden Traversen (34) derart ausgeführt ist, dass der Betätigungszylinder (30, 40) insbesondere in der Öffnungs- und der Schließstellung der Bordwand (14) wenigstens teilweise zwischen den beiden Traversen (34) aufgenommen ist.

6. Bewegungsmechanismus nach Anspruch 5, **dadurch gekennzeichnet, dass** der Betätigungszylinder (30, 40) mit einem Abschnitt zwischen den beiden Traversen (34) aufgenommen ist, welcher zwischen einer Gelenkverbindung (42) des Kolbens (40) mit der Hebelanordnung (44, 58) und dem Drehlager (32) der Lageranordnung liegt.

7. Bewegungsmechanismus nach einem der Ansprüche 1 bis 6, jedenfalls nach Anspruch 4, **dadurch gekennzeichnet, dass** das Anschlagelement (62) zwischen den beiden Traversen (34) angeordnet ist.

8. Bewegungsmechanismus nach einem der Ansprüche 4 bis 7, **dadurch gekennzeichnet, dass** die Lageranordnung (32, 34) als modulares Bauteil ausgeführt ist, das die zwei Traversen (34) und wenigstens einen Verbindungsabschnitt aufweist, wobei es an der Unterseite des Ladebodens (52) des Ladekastens befestigbar ist.

9. Bewegungsmechanismus nach einem der Ansprüche 4 bis 7, **dadurch gekennzeichnet, dass** die Lageranordnung (32, 34) von zwei mit der Unterseite des Ladebodens (52) des Ladekastens materialschlüssig verbundenen Traversen (34) gebildet wird.

10. Bewegungsmechanismus nach Anspruch 9, **dadurch gekennzeichnet, dass** wenigstens eine der beiden Traversen (34) ein Querträger des Ladekastenunterbaus ist.

11. Bewegungsmechanismus nach Anspruch 8 oder 9, **dadurch gekennzeichnet, dass** das Anschlagelement (62) am Verbindungsabschnitt der beiden Traversen oder an der Unterseite des Ladebodens (52) befestigt ist.

12. Bewegungsmechanismus nach einem der Ansprüche 8 bis 11, **dadurch gekennzeichnet, dass** die Traversen (34) derart ausgebildet sind, dass sie auch ein die Hebelachse (56) der Hebelanordnung (44, 58) definierendes Schwenklager (54) aufweisen.

13. Bewegungsmechanismus nach einem der Ansprüche 8 bis 12, **dadurch gekennzeichnet, dass** die Traversen (34) an ihren äußeren Enden derart ausgeführt sind, dass sie ein Drehlager (18) der Bordwand (14) bilden.

14. Bewegungsmechanismus nach einem der vorhergehenden Ansprüche, **dadurch gekennzeichnet, dass** der mit dem Kolben (40) des Betätigungszylinders (30) verbundene Hebel der Hebelanordnung als Gabelhebel (44) mit einem ersten und einem zweiten Schenkel (48, 50) ausgebildet ist.

15. Bewegungsmechanismus nach Anspruch 14, **dadurch gekennzeichnet, dass** der erste Schenkel (48) des Gabelhebels (44) an einem die Hebelachse (56) definierenden Schwenklager (54) angelenkt ist und dass der zweite Schenkel (50) des Gabelhebels (44) durch einen weiteren Hebel (58) mit der Bordwand (14) gelenkig verbunden ist.

16. Bewegungsmechanismus nach Anspruch 14 oder 15, **dadurch gekennzeichnet, dass** der Kolben (40) des Betätigungszylinders (30) in einem Verbindungsbereich (46) der beiden Schenkel (48, 50) des Gabelhebels (44) angelenkt ist.

17. Bewegungsmechanismus nach einem der Ansprüche 14 bis 16, **dadurch gekennzeichnet, dass** in der Schließstellung der Bordwand (14) ein die Schwenkachse festlegendes Drehlager (18) der Bordwand (14) in einem durch die Schenkel (48, 50) des Gabelhebels (44) gebildeten, im Wesentlichen U-förmigen Zwischenraum (49) aufgenommen ist.

18. Bewegungsmechanismus nach den Ansprüchen 4 und 14,
**dadurch gekennzeichnet, dass** in der Öffnungsstellung der Bordwand (14) der Gabelhebel (44) wenigstens teilweise im durch die beiden Traversen (34) gebildeten Zwischenraum aufgenommen ist.

19. Bewegungsmechanismus nach einem der vorhergehenden Ansprüche, **dadurch gekennzeichnet, dass** in der Öffnungsstellung oder/und der Schließstellung der bordwand (14) zwischen der Längsachse (L) des Betätigungszylinders (30, 40) und der Ladebodenebene (52) des Ladekastens ein winkel (α) gebildet wird, der kleiner als 15°, vorzugsweise kleiner als 10°, ist.

20. Bewegungsmechanismus nach Anspruch 19, **dadurch gekennzeichnet, dass** der Betätigungszylinder (30, 40) derart ausgerichtet ist, dass eine durch seine Gelenkverbindung (42) mit der Hebelanordnung (44, 58) festgelegte, zur Hebelachse (56) parallele Anlenkachse (41) bezogen auf die Ladebodenebene (52) unterhalb einer durch die Lagerung des Betätigungszylinders (30) in der Lageranordnung (32, 34) festgelegten, zur Hebelachse (56) parallelen Zylinderdrehachse (33) liegt.

21. Lastentransportfahrzeug mit einem Bewegungsmechanismus nach einem der Ansprüche 1 bis 20

## Claims

1. A movement mechanism for a hinged tailgate (14) of a load body (10) of a freight-conveying vehicle, which can pivot relative to the substructure of the load body (10) about a pivot axis between a closed position and an open position, comprising
- at least one actuating cylinder (30,40), in particular a hydraulic cylinder, for the selective movement of the tailgate (14),
- a lever assembly (44,58) which acts between the tailgate (14) and the actuating cylinder (30,40) and is rotatable about a lever axis (56) which is fixed relative to the load body substructure, which lever assembly converts the movement of the piston (40) of the actuating cylinder (30) into the pivoting movement of the tailgate (14),
- at least one bearing assembly (32,34), on which the at least one actuating cylinder (30) is mounted relative to the load body substructure,
wherein the mechanism further comprises mechanical limiting means (62,64) which make possible the selective variable defining of the opening position of the tailgate (14) independently of a stop position of the piston (40) in the actuating cylinder (30), and
wherein the limiting means comprise a stop member (62) and an adjustable stop counterpart (64) which is in contact with the stop member (62) in the open position of the tailgates (14), **characterised in that** the stop member (62) is mounted in the vicinity of the bearing assembly (32,34), and **in that** the adjustable stop counterpart (64) is arranged on the lever assembly (44,58).

2. A movement mechanism according to Claim 1, **characterised in that** the stop member is in the form of an inclined plate (62).

3. A movement mechanism according to Claim 1 or 2, **characterised in that** the stop counterpart is a setscrew (64).

4. A movement mechanism according to any one of the preceding Claims, **characterised in that** the bearing assembly (32,34) comprises at least one cross-member (34) projecting downwards from an underside of the load bed (52) of the load body (10), in particular a transverse beam, of the load body substructure, with a pivot bearing (32) integrated therein for the mounting of the actuating cylinder (30).

5. A movement mechanism according to Claim 4, **characterised in that** the bearing assembly is formed by two cross-members (34) aligned parallel to one another, wherein the distance between the two cross-members (34) is such that the actuating cylinder (30,40) is accommodated at least partly between the two cross-members (34), in particular in the open position and closed position of the tailgate (14).

6. A movement mechanism according to Claim 5, **characterised in that** the actuating cylinder (30,40) is accommodated between the two cross-members (34) with a portion which lies between a pivot joint (42) of the piston (40) with the lever assembly (44,58) and the pivot bearing (32) of the bearing assembly.

7. A movement mechanism according to any one of Claims 1 to 6, at least according to Claim 4, **characterised in that** the stop member (62) is disposed between the two cross-members (34).

8. A movement mechanism according to any one of Claims 4 to 7, **characterised in that** the bearing assembly (32,34) is in the form of a modular component which has the two cross-members (34) and at least one connecting portion, wherein it can be secured to the underside of the load bed (52) of the load body.

9. A movement mechanism according to any one of Claims 4 to 7, **characterised in that** the bearing assembly (32,34) is formed by two cross-members (34) connected to the underside of load bed (52) of the load body by adhesive or cohesive force.

10. A movement mechanism according to Claim 9, **characterised in that** at least one of the two cross-members (34) is a transverse beam of the load body substructure,

11. A movement mechanism according to Claim 8 or 9, **characterised in that** the stop member (62) is fastened to the connecting portion of the two cross-members (34) or to the underside of the load bed (52).

12. A movement mechanism according to any one of Claims 8 to 11, **characterised in that** the two cross-members (34) are formed so that they also have a rocker pivot (54) defining the lever axis (56) of the lever assembly (44,58).

13. A movement mechanism according to any one of Claims 8 to 12, **characterised in that** at their outer ends the two cross-members (34) are designed so that they form a pivot bearing (18) of the tailgate (14).

14. A movement mechanism according to any one of the preceding Claims, **characterised in that** the lever of the lever assembly connected to the piston (40) of the actuating cylinder (30) is in the form of a forked lever (44) with first and second arm (48,50).

15. A movement mechanism according to Claim 14, **characterised in that** the first arm (48) of the forked lever (44) is articulated at a pivot bearing pivot bearing (54) defining the lever axis (56), and **in that** the second arm (50) of the forked lever (44) is pivotably connected to the tailgate (14) by another lever (58).

16. A movement mechanism according to Claim 14 or 15, **characterised in that** the piston (40) of the actuating cylinder (30) is articulated in a connecting portion (46) of the two arms (48,50) of the forked lever (44).

17. A movement mechanism according to any one of Claims 14 to 16, **characterised in that** in the closed position of the tailgate (14) a pivot bearing (18) of the tailgate (14) defining the pivot axis is accommodated in a substantially U-shaped space (49) formed by the arms (48,50) of the forked lever (44).

18. A movement mechanism according to Claims 4 and 14, **characterised in that** in the open position of the tailgate (14) the forked lever (44) is accommodated at least partly in the space formed by the two cross-members (34).

19. A movement mechanism according to any one of the preceding Claims, **characterised in that** in the open position and/or closed position of the tailgate (14) an angle, which is less than 15°, preferably less than 10°, is formed between the longitudinal axis (L) of the actuating cylinder (30,40) and the load bed plane (52) of the load body.

20. A movement mechanism according to Claim 19, **characterised in that** the actuating cylinder (30,40) is aligned so that an articulation axis (41) defined by its pivot joint (42) with the lever assembly (44,58) and parallel to the lever axis (56) is disposed in relation to the load bed plane (52) below a cylinder axis of rotation (33) defined by the mounting of the actuating cylinder (30) in the bearing assembly (32,34) and parallel to the lever axis (56).

21. A freight-conveying vehicle with a movement mechanism according to any one of Claims 1 to 20.

## Revendications

1. Mécanisme de déplacement pour un hayon relevable (14) d'une benne de chargement (10) d'un véhicule de transport de marchandises, qui peut pivoter par rapport à la structure inférieure de la benne de chargement (10) autour d'un axe de pivotement entre une position fermée et une position ouverte, comprenant
- au moins un vérin d'actionnement (30, 40), en particulier un vérin hydraulique, pour le déplacement au choix du hayon (14),
- un système de levier (44, 58) agissant entre le hayon (14) et le vérin d'actionnement (30, 40) et pouvant tourner autour d'un axe de levier (56) stationnaire par rapport à la structure inférieure de benne de chargement, système qui transforme le mouvement d'un piston (40) du vérin d'actionnement (30) en un mouvement de pivotement du hayon (14),
- au moins un système de palier (32, 34) sur lequel le vérin d'actionnement (30) au nombre d'au moins un est monté par rapport à la structure inférieure de benne de chargement,
dans lequel le mécanisme comprend de plus des moyens mécaniques de limitation (62, 64) qui permettent l'immobilisation variable au choix de la position ouverte du hayon (14) indépendamment d'une position de butée du piston (40) dans le vérin d'actionnement (30), et
dans lequel les moyens de limitation comprennent un élément de butée (62) et un contre-élément de butée (64) mobile en contact avec l'élément de butée (62) dans la position d'ouverture du hayon (14),
**caractérisé en ce que** l'élément de butée (62) est placé au niveau du système de palier (32, 34) et **en ce que** le contre-élément de butée mobile (64) est placé sur le système de levier (44, 58).

2. Mécanisme de déplacement selon la revendication 1, **caractérisé en ce que** l'élément de butée est conformé en plaque inclinée (62).

3. Mécanisme de déplacement selon la revendication 1 ou 2, **caractérisé en ce que** le contre-élément de butée comprend une vis de réglage (64).

4. Mécanisme de déplacement selon l'une des revendications précédentes, **caractérisé en ce que** le système de palier (32, 34) comprend au moins une traverse (34) de la structure inférieure de benne de chargement, en particulier un support transversal, formant saillie vers le bas depuis une face inférieure du fond de chargement (52) de la benne de chargement (10), avec un palier rotatif intégré (32) pour soutenir le vérin d'actionnement (30).

5. Mécanisme de déplacement selon la revendication 4, **caractérisé en ce que** le système de palier est formé par deux traverses (34) mutuellement parallèles, la distance entre les deux traverses (34) étant réalisée telle que le vérin d'actionnement (30, 40) est logé au moins partiellement entre les deux traverses (34), en particulier dans la position ouverte et dans la position fermée du hayon (14).

6. Mécanisme de déplacement selon la revendication 4, **caractérisé en ce que** le cylindre d'actionnement (30, 40) est logé entre les deux traverses (34) avec une section qui se trouve entre une jonction articulée (42) du piston (40) avec le système à levier (44, 58) et le palier rotatif (32) du système de palier.

7. Mécanisme de déplacement selon l'une des revendications 1 à 6, en tous les cas selon la revendication 4, **caractérisé en ce que** l'élément de butée (62) est placé entre les deux traverses (34).

8. Mécanisme de déplacement selon l'une des revendications 4 à 7, **caractérisé en ce que** le système de palier (32, 34) est réalisé sous forme d'élément modulaire qui présente les deux traverses (34) et au moins une section de jonction, et qui peut être fixé à la face inférieure du fond de chargement (52) de la benne de chargement.

9. Mécanisme de déplacement selon l'une des revendications 4 à 7, **caractérisé en ce que** le système de palier (32, 34) est formé de deux traverses (34) reliées par venue de matière à la face inférieure du fond de chargement (52) de la benne de chargement.

10. Mécanisme de déplacement selon la revendication 9, **caractérisé en ce qu'**au moins l'une des deux traverses (34) présente un support transversal de la structure inférieure de benne de chargement.

11. Mécanisme de déplacement selon la revendication 8 ou 9, **caractérisé en ce que** l'élément de butée (62) est fixé à la section de jonction des deux traverses ou à la face inférieure du fond de chargement (52).

12. Mécanisme de déplacement selon l'une des revendications 8 à 11, **caractérisé en ce que** les traverses (34) sont conformées de telle manière qu'elles présentent également un palier pivotant (54) définissant l'axe de levier (56) du système de levier (44, 58).

13. Mécanisme de déplacement selon l'une des revendications 8 à 12, **caractérisé en ce que** les traverses (34) sont réalisées, au niveau de leurs extrémités extérieures, de telle manière qu'elles forment un palier rotatif (18) du hayon (14).

14. Mécanisme de déplacement selon l'une des revendications précédentes, **caractérisé en ce que** le levier du système de levier relié au piston (40) du vérin d'actionnement (30) est conformé en levier à fourche (44) avec une première et une deuxième branches (48, 50).

15. Mécanisme de déplacement selon la revendication 14, **caractérisé en ce que** la première branche (48) du levier à fourche (44) est articulée sur un palier pivotant (54) définissant l'axe de levier (56) et **en ce que** la deuxième branche (50) du levier à fourche (44) est reliée au hayon (14) de manière articulée par un autre levier (58).

16. Mécanisme de déplacement selon la revendication 14 ou 15, **caractérisé en ce que** le piston (40) du vérin d'actionnement (30) est articulé dans une zone de jonction (46) des deux branches (48, 50) du levier à fourche (44).

17. Mécanisme de déplacement selon l'une des revendications 14 à 16, **caractérisé en ce que**, dans la position de fermeture du hayon (14), un palier rotatif (18) du hayon (14) définissant l'axe de pivotement est logé dans un interstice (49) sensiblement en forme de U formé par les branches (48, 50) du levier à fourche (44).

18. Mécanisme de déplacement selon les revendications 4 et 14, **caractérisé en ce que**, dans la position d'ouverture du hayon (14), le levier à fourche (44) est logé au moins partiellement dans l'interstice formé par les deux traverses (34).

19. Mécanisme de déplacement selon l'une des revendications précédentes, **caractérisé en ce que**, dans la position d'ouverture et/ou dans la position de fermeture du hayon (14), il se forme entre l'axe longitudinal (L) du vérin d'actionnement (30, 40) et le plan du fond de chargement (52) de la benne de chargement un angle (α) qui est inférieur à 15°, de préférence inférieur à 10°.

20. Mécanisme de déplacement selon la revendication 19, **caractérisé en ce que** le vérin d'actionnement (30, 40) est orienté de telle manière qu'un axe d'articulation (41) parallèle à l'axe de levier (56) et défini par sa jonction articulée (42) avec le système de levier (44, 58) est situé, par rapport au plan de fond de chargement (52), au-dessous d'un axe de rotation de vérin parallèle à l'axe de levier (56) et défini par le montage du vérin d'actionnement (30) dans le système de palier (32, 34).

21. Véhicule de transport de marchandises avec un mécanisme de déplacement selon l'une des revendications 1 à 20.
